# EUROPÄISCHE PATENTSCHRIFT

(11) **EP 3 467 382 B1**
(45) Veröffentlichungstag und Bekanntmachung des Hinweises auf die Patenterteilung: **05.08.2020**
(21) Anmeldenummer: 18195115.3
(22) Anmeldetag: 18.09.2018
(51) Int. Cl.: F23K 5/02

(54) **KRAFTSTOFFANSCHLUSSEINHEIT**
FUEL CONNECTION UNIT
UNITÉ DE RACCORDEMENT DE CARBURANT

(30) Priorität: 05.10.2017 DE 102017123046
(43) Veröffentlichungstag der Anmeldung: 10.04.2019
(73) Patentinhaber: Eberspächer Climate Control Systems GmbH & Co. KG, 73730 Esslingen (DE)
(72) Erfinder: Haefner, Michael, 70469 Stuttgart (DE); Jensen, Hans, 73265 Dettingen (DE)
(74) Vertreter: Ruttensperger Lachnit Trossin Gomoll

(56) Entgegenhaltungen:
- EP-A2- 1 574 782
- CN-B- 102 393 016
- DE-A1- 3 136 839
- US-A- 3 849 055

## Beschreibung

Die vorliegende Erfindung betrifft eine Kraftstoffanschlusseinheit für ein kraftstoffbetriebenes Fahrzeugheizgerät.

Aus der DE 20 2004 015 442 U1 ist ein kraftstoffbetriebenes Fahrzeugheizgerät mit einem topfartigen Heizgerätekörper bekannt. Der Heizgerätekörper umschließt mit einer Umfangswandung einen Innenraum, in welchem der mit Kraftstoff zu speisende Brennerbereich des Fahrzeugheizgeräts angeordnet ist und mit dem Heizgerätekörper verbunden ist. In einem Längenabschnitt stellt der Heizgerätekörper einen Wärmetauscherbereich bereit, der an seiner Innenseite von aus dem Brennerbereich abgegebenem Verbrennungsabgas umströmt wird und an seiner Außenseite von zu erwärmender Luft umströmt wird.

Zur Zufuhr von Kraftstoff zu dem Brennerbereich ist eine die Umfangswandung des Heizgerätekörpers durchsetzende Kraftstoffleitung vorgesehen, welche in einem Bereich außerhalb des Heizgerätekörpers an eine Kraftstoffzuführleitung angeschlossen werden kann und mit ihrem im Innenraum sich erstreckenden Bereich in den Brennerbereich geführt ist und dort flüssigen Kraftstoff in ein poröses Verdampfermedium einspeist.

Aus der US 3 849 055 A ist ein kraftstoffbetriebenes Heizgerät bekannt, bei welchem Kraftstoff über eine Kraftstoffleitung zu einem Brenner geleitet wird. Die Kraftstoffleitung durchsetzt eine Wandung des Heizgeräts im Bereich eines dafür vorgesehenen Anschlusses.

Die CN 102 393 016 B offenbart ein Heizgerät, bei welchem über eine Kraftstoffleitung zugeführter Kraftstoff in ein Verteilerstück eingeleitet wird. Über das Verteilerstück erfolgt die Einleitung des Kraftstoffs in den Brenner.

Die EP 1 574 782 A2 offenbart ein kraftstoffbetriebenes Fahrzeugheizgerät, bei welchem in einem Bodenbereich eines Brennkammergehäuses ein poröses Verdampfermedium aufnehmender Ansatz vorgesehen ist. In diesen Ansatz mündet eine Kraftstoffleitung ein.

Die DE 31 36 839 A1 offenbart ein kraftstoffbetriebenes Fahrzeugheizgerät, bei welchem an einer Umfangswandung eines Gehäuses eine die Umfangswandung durchsetzende Öffnung ausgebildet ist. In diese Öffnung ist eine Kraftstoff zu einer Brennkammer speisende Kraftstoffabgabeleitung eingesetzt.

Es ist die Aufgabe der vorliegenden Erfindung, Maßnahmen bereitzustellen, welche eine leicht herstellbare und zuverlässig wirkende Verbindung eines Brennerbereichs eines kraftstoffbetriebenen Fahrzeugheizgerätes mit einer Kraftstoffquelle ermöglichen.

Erfindungsgemäß wird diese Aufgabe gelöst durch eine Kraftstoffanschlusseinheit für ein kraftstoffbetriebenes Fahrzeugheizgerät gemäß Anspruch 1. Diese umfasst einen an einem Heizgerätekörper anzubringenden Anschlusseinheitkörper mit einem in einen Innenraum des Heizgerätekörpers eingreifend oder diesem zugewandt zu positionierenden Kraftstoffabgabeleitungsanschlussbereich zum Anschluss einer in dem Innenraum verlaufenden Kraftstoffabgabeleitung und einem an einer Außenseite des Heizgerätekörpers freiliegend zu positionierenden Kraftstoffzuführleitungsanschlussbereich zum Anschluss einer Kraftstoffzuführleitung.

Für eine einfach herzustellende Verbindung im Innenraum eines Heizgerätekörpers umfasst der Kraftstoffabgabeleitungsanschlussbereich einen von dem Anschlusseinheitkörper abstehenden Abgabestutzen.

Um auch außerhalb des Heizgerätekörpers in einfacher und zuverlässiger Weise die Kraftstoffanschlusseinheit an eine Kraftstoffleitung anschließen zu können, umfasst der Kraftstoffzuführleitungsanschlussbereich einen von dem Anschlusseinheitkörper abstehenden Zuführstutzen. Dabei stehen der Zuführstutzen und der Abgabestutzen bezüglich einander von dem Anschlusseinheitkörper in im Wesentlichen entgegengesetzten Richtungen ab. Somit können die beiden Stutzen zur Wechselwirkung mit mit diesen jeweils zu verbindenden Kraftstoffleitungen optimal positioniert werden.

Um die Anbindung an Kraftstoffleitungen im Innenraum und außerhalb des Innenraums räumlich voneinander entkoppeln zu können, sind der Zuführstutzen und der Abgabestutzen bezüglich einander im Wesentlichen quer zu einer Längsachse des Zuführstutzens oder/und einer Längsachse des Abgabestutzens versetzt, wobei in dem Anschlusseinheitkörper ein einen Zuführkanal in dem Zuführstutzen mit einem Abgabekanal in dem Abgabestutzen verbindender Verbindungskanal vorgesehen ist.

Die erfindungsgemäß aufgebaute Kraftstoffanschlusseinheit stellt im Wesentlichen also denjenigen Bereich bereit, in welchem flüssiger Kraftstoff durch eine Wandung eines Heizgerätekörpers hindurch geführt wird. Sowohl im Innenraum des Heizgerätekörpers, als auch an dessen Außenseite wird die Kraftstoffanschlusseinheit dann über zusätzliche mit dieser zu koppelnde Leitungen an den Brennerbereich einerseits und eine Kraftstoffquelle, beispielsweise einen Kraftstofftank bzw. eine Kraftstoff aus einem Kraftstofftank fördernde Dosierpumpe, andererseits angeschlossen. Somit kann die Kraftstoffanschlusseinheit für deren Integration in den Heizgerätekörpers optimiert ausgebildet werden, während die daran anzuschließenden Leitungen für deren Wechselwirkung mit anderen Systembereichen, insbesondere dem Brennerbereich eines Fahrzeugheizgeräts, optimiert ausgebildet bzw. damit bereits zusammengesetzt bereitgestellt werden können.

Um den Austritt von Kraftstoff im Innenraum zu verhindern, kann an einem von dem Anschlusseinheitkörper entfernten Endbereich des Abgabestutzens eine Anschlussformation zum fluiddichten Anschluss einer Kraftstoffabgabeleitung an den Abgabestutzen vorgesehen sein.

Insbesondere kann der fluiddichte Anschluss dadurch realisiert werden bzw. leicht hergestellt werden, dass die Anschlussformation wenigstens ein in einem Abgabeöffnungsbereich des Abgabestutzens aufgenommenes, an eine Innenumfangsfläche des Abgabeöffnungsbereichs fluiddicht anschließendes Dichtelement mit einer Dichtelement-Einführöffnung umfasst, oder/und das die Anschlussformation eine trichterartige Kraftstoffabgabeleitung-Einführöffnung bereitstellt.

Für einen einfach zu realisierenden Aufbau wird vorgeschlagen, dass die Anschlussformation ein die trichterartige Kraftstoffabgabeleitung-Einführöffnung bereitstellendes Einführelement umfasst, und dass das wenigstens eine Dichtelement durch das Einführelement im Abgabeöffnungsbereich gehalten ist.

Der Abgabestutzen kann mit dem Anschlusseinheitkörper einstückig ausgebildet sein, vorzugsweise aus Kunststoffmaterial. Dies vereinfacht den Aufbau und verringert die Anzahl der zum Aufbau der Kraftstoffanschlusseinheit erforderlichen Bauteile.

Für einen einfach und mit einer geringen Anzahl an Bauteilen herzustellenden Aufbau kann der Zuführstutzen mit dem Anschlusseinheitkörper einstückig ausgebildet sein, vorzugsweise aus Kunststoffmaterial.

Bei einer insbesondere in Anwendungen mit hohen Stabilitätsanforderungen vorteilhaften Variante kann der Zuführstutzen von dem Anschlusseinheitkörper separat ausgebildet sein, vorzugsweise aus Metallmaterial.

Bei einer alternativen Ausgestaltungsart für die Anbindung jeweiliger Kraftstoffleitungen an die Kraftstoffanschlusseinheit kann vorgesehen sein, dass der Kraftstoffzuführleitungsanschlussbereich oder/und der Kraftstoffabgabeleitungsanschlussbereich eine in einer Öffnung des Anschlusseinheitkörpers aufgenommene Schnellverbindungseinheit zum Anschluss einer Kraftstoffleitung an den Anschlusseinheitkörper umfasst. In eine derartige Schnellverbindungseinheit kann dann eine gegebenenfalls auch flexibel ausgebildete Kraftstoffleitung eingesteckt und im Allgemeinen durch Klemmwirkung arretiert werden.

Um eine insbesondere vor Anbringung eines Fahrzeugheizgeräts an einem Fahrzeug stabile Verbindung zwischen der Kraftstoffanschlusseinheit und dem Heizgerätekörpers bereitstellen zu können, kann an dem Anschlusseinheitkörper wenigstens eine Halteformation, vorzugsweise Rastformation oder Klemmformation, zum Halten des Anschlusseinheitkörpers an einem Heizgerätekörper vorgesehen sein.

Die vorliegende Erfindung betrifft ferner ein Fahrzeugheizgerät, umfassend einen Heizgerätekörper mit einer einen Innenraum umschließenden Umfangswandung, wobei in der Umfangswandung eine Kraftstoffanschlusseinheit-Aufnahmeöffnung vorgesehen ist und eine erfindungsgemäß aufgebaute Kraftstoffanschlusseinheit in der Kraftstoffanschlusseinheit-Aufnahmeöffnung aufgenommen ist.

Dabei kann zur Erlangung eines fluiddichten Anschlusses der Kraftstoffanschlusseinheit an den Heizgerätekörpers vorteilhafterweise vorgesehen sein, dass die Kraftstoffanschlusseinheit-Aufnahmeöffnung in Öffnungsumfangsrichtung vollständig geschlossen ist.

Für die fluiddichte Anbindung der Kraftstoffeinheit-Aufnahmeöffnung kann die Kraftstoffanschlusseinheit unter Zwischenlagerung wenigstens eines den Anschlusseinheitkörper oder/und wenigstens eines einen Abgabestutzen umgebenden Dichtelements in der Kraftstoffanschlusseinheit-Aufnahmeöffnung aufgenommen sein.

Die vorliegende Erfindung wird nachfolgend mit Bezug auf die beiliegenden Figuren detailliert beschrieben. Es zeigt:
- Fig. 1: in perspektivischer Ansicht eine Kraftstoffanschlusseinheit für ein Fahrzeugheizgerät;
- Fig. 2: die Kraftstoffanschlusseinheit der Fig. 1 im Längsschnitt;
- Fig. 3: eine der Fig. 2 entsprechende Darstellung einer alternativen Ausgestaltungsart der Kraftstoffanschlusseinheit;
- Fig. 4: eine perspektivische Teil-Ansicht eines mit einer Kraftstoffeinheit ausgestatteten Fahrzeugheizgeräts;
- Fig. 5: eine Teil-Längsschnittansicht des Fahrzeugheizgeräts der Fig. 4;
- Fig. 6: eine perspektivische Teil-Ansicht des Fahrzeugheizgeräts der Fig. 4;
- Fig. 7: eine weitere perspektivische Teil-Ansicht des Fahrzeug-Heizgeräts der Fig. 4 bei nicht montierter Kraftstoffanschlusseinheit und nicht montiertem Verbrennungsluftgebläse.

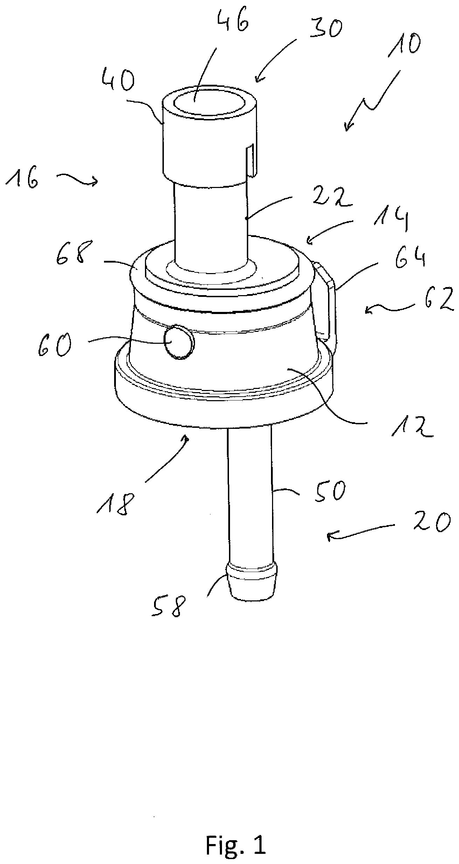

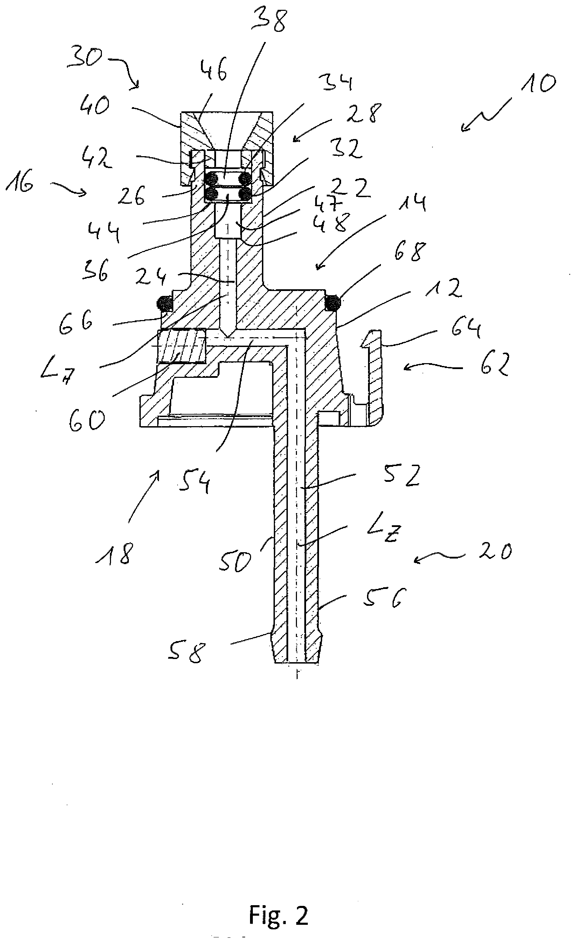

Die Fig. 1 und 2 zeigen eine bei einem mit Kraftstoff zu betreibenden Fahrzeugheizgerät, das beispielsweise als Standheizung oder Zuheizer eingesetzt werden kann, vorzusehende Kraftstoffanschlusseinheit 10. Die Kraftstoffanschlusseinheit 10 umfasst einen scheibenartig ausgebildeten Anschlusseinheitkörper 12, mit welchem die Kraftstoffanschlusseinheit 10 in eine nachfolgend noch erläuterte Kraftstoffanschlusseinheit-Aufnahmeöffnung eines Heizgerätekörpers einzusetzen ist. An einer in den Fig. 1 und 2 oben liegenden Stirnseite 14 des Anschlusseinheitkörpers 12 ist ein allgemein mit 16 bezeichneter Kraftstoffabgabeleitungsanschlussbereich vorgesehen. Mit diesem ist die Kraftstoffanschlusseinheit 10 in einen Innenraum eines Heizgerätekörpers eingreifend zu positionieren, um in diesem Innenraum eine Kraftstoffabgabeleitung mit der Kraftstoffanschlusseinheit zu verbinden.

An einer in den Fig. 1 und 2 unten liegend positionierten Stirnseite 18 des Anschlusseinheitkörpers 14 ist ein Kraftstoffzuführleitungsanschlussbereich 20 vorgesehen. Dieser liegt bei an einem Heizgerätekörper eines Fahrzeugheizgeräts angebrachter Kraftstoffanschlusseinheit 10 außerhalb des Fahrzeugheizgeräts und ist zum Anschluss einer Kraftstoffzuführleitung, über welche beispielsweise von einer Dosierpumpe und einem Kraftstofftank flüssiger Kraftstoff zugeführt wird, vorgesehen.

Der Kraftstoffabgabeleitungsanschlussbereich 16 umfasst einen vom Anschlusseinheitkörper 12 sich weg erstreckenden Abgabestutzen 22. Im Abgabestutzen 22 ist ein Abgabekanal 24 vorgesehen, welcher in einem vom Anschlusseinheitkörper 12 entfernt liegenden Endbereich 26 des Abgabestutzens 22 in einem Abgabeöffnungsbereich 28 offen ist. Der Abgabekanal 24 erweitert sich im Abgabeöffnungsbereich 28 beispielsweise stufenartig.

Am Abgabeöffnungsbereich 28 ist eine allgemein mit 30 bezeichnete Anschlussformation vorgesehen. Über diese Anschlussformation 30 kann eine beispielsweise als Metallrohr ausgebildete Kraftstoffabgabeleitung an die Kraftstoffanschlusseinheit 10 angeschlossen werden. Die Anschlussformation 30 umfasst im dargestellten Ausgestaltungsbeispiel zwei beispielsweise O-ringartig ausgebildete Dichtelemente 32, 34 jeweils mit einer Dichtelementeinführöffnung 36, 38, in welche die Kraftstoffabgabeleitung derart eingeführt werden kann, dass die Dichtelemente 32, 34 in ihrem Außenumfangsbereich fluiddicht an einer Innenumfangsfläche des Abgabeöffnungsbereichs 28 bzw. des Abgabekanals 24 anliegen und mit ihrem Innenumfangsbereich fluiddicht an der Außenumfangsfläche der Kraftstoffabgabeleitung anliegen. Um das Einführen der Kraftstoffabgabeleitung in die beiden Dichtelemente 32, 34 zu erleichtern, können diese beispielsweise durch eine zwischen diesen positionierte, ringartige Trennscheibe getrennt sein.

Die Anschlussformation 30 umfasst ferner ein Einführelement 40, welches auf den Endbereich 26 des Abgabestutzens 24 aufgesetzt und daran beispielsweise durch Verrastung gehalten ist. Mit einem in den Endbereich 26 eingreifenden Abschnitt 42 hält das Einführelement 40 die beiden Dichtelemente 32, 34 im Abgabeöffnungsbereich 28 derart, dass diese zwischen dem Abschnitt 42 des Einführelements 40 und einer stufenartigen Erweiterung 44 des Abgabekanals 24 positioniert sind. Das Einführelement 40 stellt eine trichterartig geformte Kraftstoffabgabeleitung-Einführöffnung 46 bereit, welche einerseits das Einführen der Kraftstoffabgabeleitung erleichtert, andererseits dafür sorgt, dass diese im Verlaufe der Einführbewegung so geführt bzw. positioniert wird, dass sie in die durch die Dichtelemente 32, 34 bereitgestellten Dichtelement-Einführöffnungen 36, 38 eintreten kann, ohne die Dichtelemente 32, 34 zu beschädigen. In einem an die stufenartige Erweiterung anschließenden Bereich 47 des Abgabekanals 24, der in einem weiteren stufenartigen Erweiterungsbereich 48 endet, ist der Abgabekanal 24 derart dimensioniert, dass die Kraftstoffabgabeleitung nach Hindurchführung durch die beiden Dichtelemente 32, 34 darin aufgenommen werden kann. Die stufenartige Erweiterung 48 kann dabei einen Einführeinschlag für die Kraftstoffabgabeleitung bilden, so dass gewährleistet ist, dass diese nicht übermäßig weit in den Abgabestutzen 22 eingeführt wird bzw. darin in definierter Positionierung gehalten ist.

Der an der Stirnseite 18 vorgesehene Kraftstoffzuführleitungsanschlussbereich 20 umfasst einen Zuführstutzen 50. Der Zuführstutzen 50 erstreckt sich vom Anschlusseinheitkörper 12 in einer der Erstreckungsrichtung des Abgabestutzens 22 im Wesentlichen entgegengesetzten Richtung und weist einen Zuführkanal 52 auf. Wie in Fig. 2 deutlich zu erkennen ist, sind der Abgabestutzen 22 und der Zuführstutzen 50 derart positioniert, dass sie im Wesentlichen quer zu ihren jeweiligen Längsachsen L_{A} bzw. Lz versetzt sind, sich grundsätzlich aber im Wesentlichen parallel zueinander erstrecken. Um zwischen dem Zuführkanal 52 und dem Abgabekanal 24 eine Verbindung herzustellen, ist im Anschlusseinheitkörper 12 ein Verbindungskanal 54 ausgebildet, der, sich im Wesentlichen orthogonal zum Zuführkanal 52 bzw. Abgabekanal 24 erstreckend, diese beiden Kanäle in ihren einander nahe liegenden Endbereichen miteinander verbindet. In dem vom Anschlusseinheitkörper 12 entfernten Endbereich 56 weist der Zuführstutzen 50 eine beispielsweise wulstartige Erweiterung 58 auf, auf welche eine Kraftstoffzuführleitung, beispielsweise eine flexible Schlauchleitung, aufgeschoben werden kann, um diese am Kraftstoffzuführstutzen 50 festzulegen bzw. mit diesem zu verbinden. Eine Rohrschelle oder ein ähnliches Befestigungselement kann eingesetzt werden, um ein Loslösen der Kraftstoffzuführleitung vom Zuführstutzen 50 zu verhindern.

Bei der in Fig. 2 dargestellten Ausgestaltungsform der Kraftstoffanschlusseinheit 10 ist der Anschlusseinheitkörper 12 mit dem Abgabestutzen 22 und dem Zuführstutzen 50 einstückig, also als ein Materialblock ausgebildet. Vorzugsweise ist diese Einheit aus Kunststoffmaterial in einem Gussverfahren hergestellt. Um dabei durch entsprechende Formkerne den Abgabekanal 24, den Zuführkanal 52 und den Verbindungskanal 54 erzeugen zu können, diese Kerne nach dem Gussvorgang jedoch entfernen zu können, ist auch der Verbindungskanal 54 als grundsätzlich zu einem Außenumfangsbereich des Anschlusseinheitkörpers 12 offener Kanal ausgebildet und ist in diesem Bereich durch ein den Verbindungskanal 54 fluiddicht abschließendes Verschlusselement 60 abgeschlossen. Das beispielsweise ebenfalls aus Kunststoffmaterial aufgebaute Verschlusselement 60 kann in einen beispielsweise erweiterten Endbereich des Verbindungskanals 54 eingepresst und somit fest darin gehalten werden. Anstelle der Verwendung eines Verschlusselements kann der Verbindungskanal 54 in seinem zum Außenumfang des Anschlusseinheitkörpers 12 offenen Endbereich auch durch einen Schweißverschluss dicht abgeschlossen werden.

Am Anschlusseinheitkörper 12 ist eine allgemein mit 62 bezeichnete Halteformation ausgebildet. Diese umfasst in einem Umfangsbereich des Anschlusseinheitkörpers 12 eine Rastlasche 64, welche, wie nachfolgend beschrieben, mit einer entsprechenden Formation an einem Heizgerätekörper zusammenwirken kann, um die Kraftstoffanschlusseinheit 10 am Heizgerätekörper zu halten. Ferner ist nahe der Stirnseite 14, also der einem Innenraum eines Heizgerätekörpers zugewandt zu positionierenden Stirnseite, am Anschlusseinheitkörper 12 ein stufenartiger Absatz 66 gebildet, in welchem der Anschlusseinheitkörper 12 von einem ringartigen Dichtelement 68 umgeben ist. Bei an einem Heizgerätekörper angebrachter Kraftstoffanschlusseinheit 10 sorgt das Dichtelement 68 für einen insbesondere gegen den Austritt von Gas aus dem Innenraum dichten Anschluss des Anschlusseinheitkörpers 12 an den Heizgerätekörper.

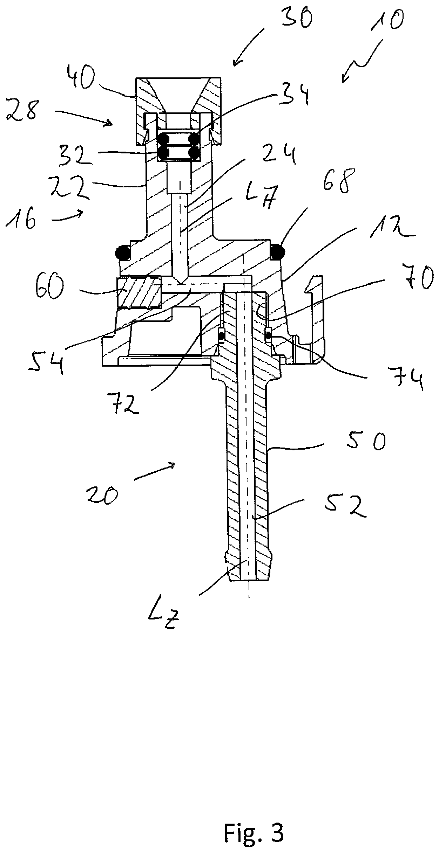

Die Fig. 3 zeigt eine Abwandlung der in Fig. 2 dargestellten Ausgestaltungsart der Kraftstoffanschlusseinheit 10. Man erkennt, dass der im Wesentlichen den Kraftstoffzuführleitungsanschlussbereich 20 bereitstellende Zuführstutzen 50 nicht mit dem Anschlusseinheitkörper 12 einstückig ausgebildet ist, sondern durch ein separates Bauteil bereitgestellt ist. Im Anschlusseinheitkörper 12 ist eine beispielsweise mit Innengewinde ausgebildete Öffnung 70 vorgesehen, in welche ein beispielsweise mit Außengewinde ausgebildeter Endbereich 72 des Zuführstutzens 50 eingeführt bzw. bei Ausgestaltung mit Gewinde eingeschraubt ist. Um einen fluiddichten Anschluss zu gewährleisten, ist der Endbereich 72, beispielsweise anschließend an das dort vorgesehene Außengewinde, von einem O-ringartigen Dichtelement 74 umgeben, welches einerseits am Außenumfang des Endbereichs 72 des Zuführstutzens 50 und andererseits an der Innenoberfläche der Öffnung 70 im Anschlusseinheitkörper 12 anliegt und somit eine Dichtwirkung erzeugt.

Um ein Loslösen des als separates Bauteil ausgebildeten Zuführstutzens zu verhindern, kann dieser derart fest in die Öffnung 70 eingeschraubt werden, dass eine eine stabile Halterung gewährleistende Klemmwirkung generiert wird. Zusätzlich kann durch Verklebung des Zuführstutzens 50 mit dem Anschlusseinheitkörper 12 ein Loslösen verhindert werden. Bei Ausgestaltung ohne Gewinde kann der Zuführstutzen 50 mit seinem Endbereich 72 in die Öffnung 70 eingepresst werden und somit, beispielsweise auch unterstützt durch die Haftwirkung eines Klebstoffs, stabil im Anschlusseinheitkörper 12 gehalten werden.

Bei der in Fig. 3 dargestellten Ausgestaltungsart einer Kraftstoffanschlusseinheit 10 ist es möglich, für den Zuführstutzen 50 einerseits und den Anschlusseinheitkörper 12 andererseits unterschiedliche Aufbaumaterialien zu verwenden. Während der Anschlusseinheitkörper 12, beispielsweise mit dem damit einstückig ausgebildeten Abgabestutzen 22 aus Kunststoffmaterial in einem Gussverfahren hergestellt werden kann, kann der Zuführstutzen 50 aus Metallmaterial, beispielsweise Aluminiummaterial, aufgebaut werden. Eine derartige Ausgestaltung ist insbesondere dort von Vorteil, wo das Auftreten von beispielsweise auf eine Kraftstoffzuführleitung einwirkenden Kräften oder/und Vibrationeneine besondere Stabilität der Kraftstoffanschlusseinheit 10 fordert.

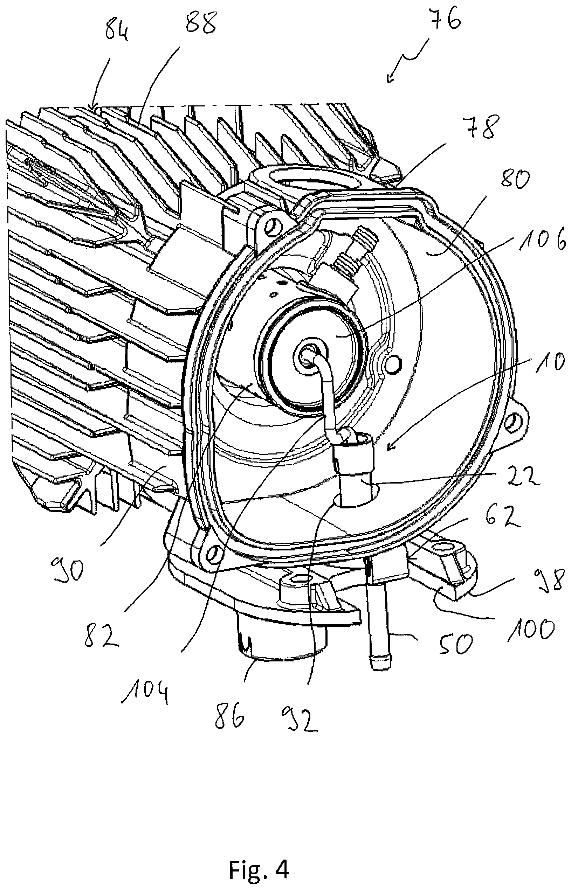

Nachfolgend wird mit Bezug auf die Fig. 4 bis 7 die Integration einer derartigen Kraftstoffanschlusseinheit 10 in ein Fahrzeugheizgerät beschrieben. Dies gilt für beide in den Fig. 2 und 3 dargestellte, grundsätzlich gleich dimensionierte Ausgestaltungsformen der Kraftstoffanschlusseinheit 10 gleichermaßen.

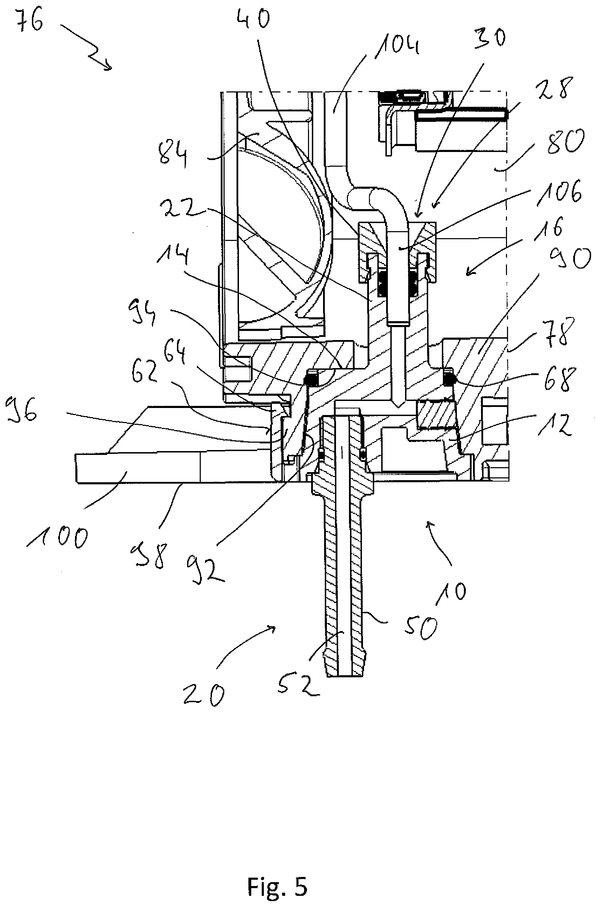

Die Fig. 4 zeigt einen Teilbereich eines mit Kraftstoff zu betreibenden Fahrzeugheizgeräts 76. Das kraftstoffbetriebene Fahrzeugheizgerät 76 umfasst einen allgemein mit 78 bezeichneten Heizgerätekörper. Dieser stellt in einem in Fig. 4 erkennbaren axial bezüglich einer Längsmittenachse des Heizgerätekörpers 78 offenen Endbereich einen Innenraum 80 bereit, in welchen eine allgemein mit 82 bezeichnete Brennkammerbaugruppe eingesetzt ist. Über ein den Innenraum 80 axial abschließendes und in Fig. 5 bereichsweise dargestelltes Verbrennungsluftgebläse 84, beispielsweise ausgebildet als Seitenkanalgebläse, wird in den Innenraum 80 und somit über diesen zur Brennkammerbaugruppe 82 die für die Verbrennung erforderliche Luft gefördert. In einem in Fig. 4 im linken Bereich dargestellten Abschnitt bildet der Heizgerätekörper 78 eine Wärmetauscheranordnung 84, welche an ihrer Innenseite von über einen Abgasauslassstutzen 86 abgegebenem Abgas umströmt wird und an ihrer Außenseite im Bereich von dort vorgesehenen Wärmeübertragungsrippen 88 von zu erwärmender Luft umströmt wird.

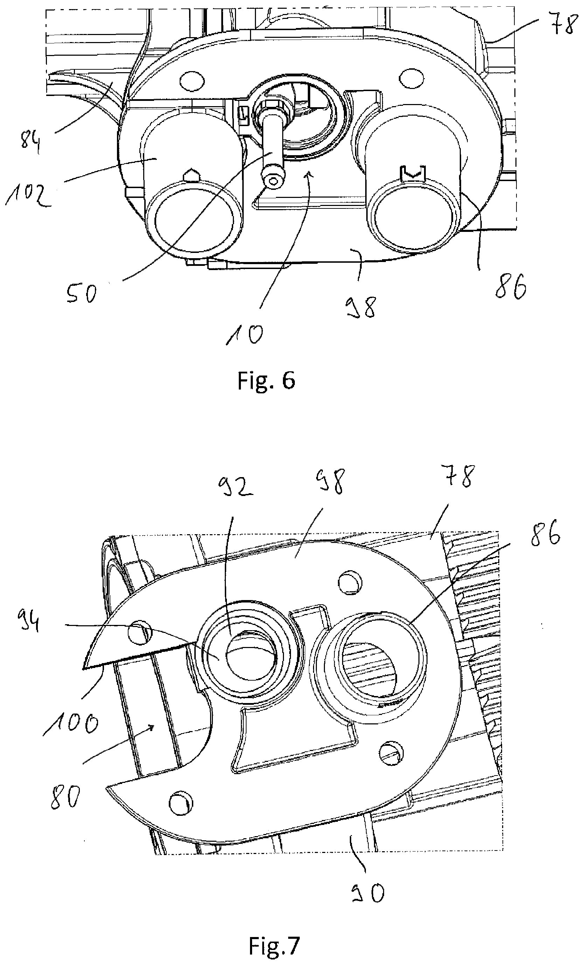

In der den Innenraum 80 umgebenden Umfangswandung 90 des Heizgerätekörpers 78 ist eine in Fig. 5 und Fig. 7 deutlich erkennbare Kraftstoffanschlusseinheit-Aufnahmeöffnung 92 ausgebildet. Die Kraftstoffanschlusseinheit-Aufnahmeöffnung 92 ist so geformt und dimensioniert, dass der Anschlusseinheitkörper 12 darin mit enger Passung aufgenommen werden kann und das Dichtelement 68 zur Herstellung eines gegen den Austritt von Gas dichten Anschlusses an einer Innenoberfläche der Kraftstoffanschlusseinheit-Aufnahmeöffnung 92 anliegt. Bei vollständig in die Kraftstoff-Aufnahmeöffnung 92 eingesetztem Anschlusseinheitkörper 12 liegt dieser mit seiner Stirnseite 14 an einem Bodenbereich 94 der Kraftstoffanschlusseinheit-Aufnahmeöffnung 92 an. In diesem Zustand übergreift die Rastlasche 64 eine komplementäre Formation 96 an dem Heizgerätekörper 78, so dass die Kraftstoffanschlusseinheit 10 durch Rasteingriff in definierter Positionierung am Heizgerätekörper 78 gehalten ist.

Man erkennt in den Fig. 4 bis 7, dass in demjenigen Bereich der Umfangswandung 90, in welchem die Kraftstoffanschlusseinheit-Aufnahmeöffnung 92 gebildet ist, am Heizgerätekörper 78 ein plattenartiger Montagebereich 98 ausgebildet ist, mit welchem das Fahrzeugheizgerät 76 bzw. der Heizgerätekörper 78 an einem Trägerbereich in einem Fahrzeug montiert werden kann. Die Kraftstoffanschlusseinheit-Aufnahmeöffnung 92 durchsetzt den plattenartigen Montagebereich 98 und bildet in diesem eine in Umfangsrichtung geschlossene Öffnung, so dass durch das Dichtelement 68 über den gesamten Umfang ein fluiddichter, insbesondere auch gasdichter Anschluss gewährleistet ist. Im Bereich des plattenartigen Montagebereichs 98 ist ferner der vorzugsweise mit dem Heizgerätekörper 78 integral ausgebildete Abgasabgabestutzen 86 vorgesehen und ist auch eine seitlich offene Aussparung 100 vorgesehen, in welche ein Verbrennungsluftzuführstutzen 102 des Gebläses 84 beim Anbringen des Gebläses 84 am Heizgerätekörper 78 eingreifend positioniert werden kann.

Der Abgasabgabestutzen 86 und der Verbrennungsluftzuführstutzen 102 definieren eine Schnittstelle, mit welcher das Fahrzeugheizgerät 76 in Verbindung mit einer komplementär geformten Schnittstelle an einem fahrzeugfesten Träger gebracht wird. Teil dieser komplementären Schnittstelle kann auch eine Kraftstoffzuführleitung sein, so dass durch Anbringung der Kraftstoffanschlusseinheit 10 am Heizgerätekörper 78 in definierter Positionierung auch der Kraftstoffzuführleitungsanschlussbereich 20, insbesondere der Zuführstutzen 50 desselben, eine definierte Relativpositionierung bezüglich des Abgasabgabestutzens 86 und des Verbrennungsluftzuführstutzens 102 einnehmen kann.

Die Fig. 5 zeigt deutlich, dass bei am Heizgerätekörper 78 angebrachter Kraftstoffanschlusseinheit 10 der Kraftstoffabgabeleitungsanschlussbereich 16 im Innenraum 80 positioniert ist. In diesem Innenraum 80 erstreckt sich auch eine beispielsweise als Metallrohr ausgebildete Kraftstoffabgabeleitung 104, welche mit der Brennkammerbaugruppe 82 fest verbunden sein kann und in ihrem in der Brennkammerbaugruppe 82 liegenden Endbereich flüssigen Kraftstoff beispielsweise in ein poröses Verdampfermedium einspeist. Die beispielsweise in einem Bodenbereich 106 aus der Brennkammerbaugruppe 82 heraus geführte Kraftstoffabgabeleitung 104 ist so geformt und dimensioniert, dass sie bei am Heizgerätekörper 78 angebrachter Brennkammerbaugruppe 82 in Abstand zu einer Innenoberfläche der Umfangswandung 90 des Heizgerätekörpers 78 endet. Dies bedeutet, dass die Brennkammerbaugruppe 82 mit der daran vorgesehenen Kraftstoffabgabeleitung 104 in den Heizgerätekörper 78 eingesetzt werden kann, ohne dass die Kraftstoffabgabeleitung 104 sich gegenseitig mit der Umfangswandung 90 stört. Bei am Heizgerätekörper 78 angebrachter Brennkammerbaugruppe 82 ist die Kraftstoffabgabeleitung 104 so positioniert, dass ihr an die Kraftstoffanschlusseinheit 10 anzuschließender Endbereich 106 in demjenigen Bereich positioniert ist, in welchem bei in die Kraftstoffanschlusseinheit-Aufnahmeöffnung 92 eingesetzter Kraftstoffanschlusseinheit 10 der Abgabestutzen 22 mit seinem Abgabeöffnungsbereich 28 positioniert ist. Bei Anbringung der Kraftstoffanschlusseinheit 10 wird diese derart in die Kraftstoffanschlusseinheit-Aufnahmeöffnung 92 eingesetzt, dass im Verlaufe der dazu erforderlichen Bewegung der Endbereich 106 der Kraftstoffabgabeleitung 104 über die trichterförmige Kraftstoffabgabeleitung-Einführöffnung 46 in den Abgabeöffnungsbereich 28 eintritt und dabei durch die in den Dichtelementen 32, 34 vorgesehenen Dichtelement-Einführöffnungen 36, 38 hindurchgeführt wird. Bei am Bodenbereich 94 der Kraftstoffanschlusseinheit-Aufnahmeöffnung 92 aufsitzender Stirnseite 14 des Anschlusseinheitkörpers 12 liegt der Endbereich 106 der Kraftstoffabgabeleitung 104 kurz vor oder an der stufenartigen Erweiterung 48 des Abgabekanals 24.

Nach dem Einsetzen der Kraftstoffanschlusseinheit 10 in die Kraftstoffanschlusseinheit-Aufnahmeöffnung 92 sind der Abgabestutzen 22 und der Zuführstutzen 50 derart positioniert, dass ein gegenseitiges Stören des Abgabestutzens 22 mit dem Gebläse 84 vermieden ist, dass andererseits der zum Abgabestutzen 22 versetzte Zuführstutzen 50 jedoch in einer zum Aufbau der bereits angesprochenen Schnittstelle erforderlichen Positionierung an der Außenseite des Heizgerätekörpers 78 liegt. In diesem Zustand ist die Kraftstoffanschlusseinheit 10 durch die Halteformation 62 am Heizgerätekörper 78 gehalten. Wird das so mit der Kraftstoffanschlusseinheit 10 ausgestattete Fahrzeugheizgerät 76 mit seinem plattenartigen Montagebereich 98 auf einem komplementär geformten Träger an einem Fahrzeug angebracht, ist die Kraftstoffanschlusseinheit 10 zusätzlich zu der durch die Halteformation 62 bereitgestellten Haltewirkung fest zwischen dem Bodenbereich 94 der Kraftstoffanschlusseinheit-Aufnahmeöffnung 92 und dem am plattenartigen Montagebereich 98 anliegenden, fahrzeugfesten Träger gehalten. Ein Loslösen der Kraftstoffanschlusseinheit 10 ist somit vollständig verhindert.

Bei einer alternativen Ausgestaltungsart könnte zumindest der zum Anschluss einer Kraftstoffzuführleitung ausgebildete bzw. vorgesehene Kraftstoffzuführleitungsanschlussbereich anstelle eines in den Figuren dargestellten Stutzens eine in die beispielsweise in Fig. 3 erkennbare Öffnung 70 des Anschlusseinheitkörpers 12 eingesetzte Schnellverbindungseinheit umfassen, in welche eine rohrartig oder schlauchartig ausgebildete Kraftstoffzuführleitung eingeführt wird und darin durch Klemmwirkung arretiert wird. Ferner könnte bei einer alternativen Ausgestaltung das den dichten Anschluss der Kraftstoffanschlusseinheit 10 zum Heizgerätekörper 78 bereitstellende Dichtelement 68 den Abgabestutzen 22 umgebend angeordnet sein und dort mit der Umfangswandung 90 zum Herstellen des dichten Anschlusses zusammenwirken.

## Patentansprüche

1. Kraftstoffanschlusseinheit für ein Kraftstoff betriebenes Fahrzeugheizgerät, umfassend einen an einem Heizgerätekörper (78) anzubringenden Anschlusseinheitkörper (12) mit einem in einen Innenraum (80) des Heizgerätekörpers (78) eingreifend oder diesem zugewandt zu positionierenden Kraftstoffabgabeleitungsanschlussbereich (16) zum Anschluss einer in dem Innenraum (80) verlaufenden Kraftstoffabgabeleitung (104) und einem an einer Außenseite des Heizgerätekörpers (78) freiliegend zu positionierenden Kraftstoffzuführleitungsanschlussbereich (20) zum Anschluss einer Kraftstoffzuführleitung, wobei der Kraftstoffabgabeleitungsanschlussbereich (16) einen von dem Anschlusseinheitkörper (12) abstehenden Abgabestutzen (22) umfasst, wobei der Kraftstoffzuführleitungsanschlussbereich (20) einen von dem Anschlusseinheitkörper (12) abstehenden Zuführstutzen (50) umfasst, wobei der Zuführstutzen (50) und der Abgabestutzen (22) bezüglich einander von dem Anschlusseinheitkörper (12) in im Wesentlichen entgegengesetzten Richtungen abstehen, wobei der Zuführstutzen (50) und der Abgabestutzen (22) bezüglich einander im Wesentlichen quer zu einer Längsachse (Lz) des Zuführstutzens (50) und einer Längsachse (L_{A}) des Abgabestutzens (22) versetzt sind, wobei in dem Anschlusseinheitkörper (12) ein einen Zuführkanal (52) in dem Zuführstutzen (50) mit einem Abgabekanal (24) in dem Abgabestutzen (22) verbindender Verbindungskanal (54) vorgesehen ist.

2. Kraftstoffanschlusseinheit nach Anspruch 1, **dadurch gekennzeichnet, dass** an einem von dem Anschlusseinheitkörper (12) entfernten Endbereich (26) des Abgabestutzens (22) eine Anschlussformation (30) zum fluiddichten Anschluss der Kraftstoffabgabeleitung (104) an den Abgabestutzen (22) vorgesehen ist.

3. Kraftstoffanschlusseinheit nach Anspruch 2, **dadurch gekennzeichnet, dass** die Anschlussformation (30) wenigstens ein in einem Abgabeöffnungsbereich (28) des Abgabestutzens (22) aufgenommenes, an eine Innenumfangsfläche des Abgabeöffnungsbereichs (28) fluiddicht anschließendes Dichtelement (32, 34) mit einer Dichtelement-Einführöffnung (36, 38) umfasst, oder/und dass die Anschlussformation (30) eine trichterartige Kraftstoffabgabeleitung-Einführöffnung (46) bereitstellt.

4. Kraftstoffanschlusseinheit nach Anspruch 3, **dadurch gekennzeichnet, dass** die Anschlussformation (30) ein die trichterartige Kraftstoffabgabeleitung-Einführöffnung (46) bereitstellendes Einführelement (40) umfasst, und dass das wenigstens eine Dichtelement (32, 34) durch das Einführelement (40) im Abgabeöffnungsbereich (28) gehalten ist.

5. Kraftstoffanschlusseinheit nach einem der Ansprüche 1-4, **dadurch gekennzeichnet, dass** der Abgabestutzen (22) mit dem Anschlusseinheitkörper (12) einstückig ausgebildet ist, vorzugsweise aus Kunststoffmaterial.

6. Kraftstoffanschlusseinheit nach einem der Ansprüche 1-5, **dadurch gekennzeichnet, dass** der Zuführstutzen (50) mit dem Anschlusseinheitkörper (12) einstückig ausgebildet ist, vorzugsweise aus Kunststoffmaterial.

7. Kraftstoffanschlusseinheit nach einem der Ansprüche 1-5, **dadurch gekennzeichnet, dass** der Zuführstutzen (50) von dem Anschlusseinheitkörper (12) separat ausgebildet ist, vorzugsweise aus Metallmaterial.

8. Kraftstoffanschlusseinheit nach einem der vorangehenden Ansprüche, **dadurch gekennzeichnet, dass** der Kraftstoffzuführleitungsanschlussbereich (20) oder/und der Kraftstoffabgabeleitungsanschlussbereich (16) eine in einer Öffnung (70) des Anschlusseinheitkörpers (12) aufgenommene Schnellverbindungseinheit zum Anschluss einer Kraftstoffleitung an den Anschlusseinheitkörper (12) umfasst.

9. Kraftstoffanschlusseinheit nach einem der vorangehenden Ansprüche, **dadurch gekennzeichnet, dass** an dem Anschlusseinheitkörper (12) wenigstens eine Halteformation (62), vorzugsweise Rastformation oder Klemmformation, zum Halten des Anschlusseinheitkörpers (12) an einem Heizgerätekörper (78) vorgesehen ist.

10. Fahrzeugheizgerät, umfassend einen Heizgerätekörper (78) mit einer einen Innenraum (80) umschließenden Umfangswandung (90), wobei in der Umfangswandung (90) eine Kraftstoffanschlusseinheit-Aufnahmeöffnung (92) vorgesehen ist und eine Kraftstoffanschlusseinheit (10) nach einem der vorangehenden Ansprüche in der Kraftstoffanschlusseinheit-Aufnahmeöffnung (92) aufgenommen ist.

11. Fahrzeugheizgerät nach Anspruch 10, **dadurch gekennzeichnet, dass** die Kraftstoffanschlusseinheit-Aufnahmeöffnung (92) in Öffnungsumfangsrichtung vollständig geschlossen ist.

12. Fahrzeugheizgerät nach Anspruch 10 oder 11, **dadurch gekennzeichnet, dass** die Kraftstoffanschlusseinheit (10) unter Zwischenlagerung wenigstens eines den Anschlusseinheitkörper (12) oder/und wenigstens eines einen Abgabestutzen (22) umgebenden Dichtelements (68) in der Kraftstoffanschlusseinheit-Aufnahmeöffnung (92) aufgenommen ist.

## Claims

1. Fuel connection unit for a fuel-operated vehicle heating device, comprising a connection unit body (12) to be mounted on a heating device body (78) with a fuel release line connection area (16), which is to be positioned such that it meshes with or faces an interior (80) of the heating device body (78), for connecting a fuel release line (104) extending in the interior (80), and with a fuel feed line connection area (20) to be positioned exposed on an outer side of the heating device body (78) for connecting a fuel feed line, wherein the fuel release line connection area (16) comprises a release pipe (22) projecting from the connection unit body (12), wherein the fuel feed line connection area (20) comprises a feed pipe (50) projecting from the connection unit body (12), wherein the feed pipe (50) and the release pipe (22) project from the connection unit body (12) in relation to one another in essentially opposite directions, wherein the feed pipe (50) and the release pipe (22) are offset in relation to one another essentially at right angles to a longitudinal axis (Lz) of the feed pipe (50) and to a longitudinal axis (L_{A}) of the release pipe (22), wherein a connection duct (54) connecting a feed duct (52) in the feed pipe (50) to a release duct (24) in the release pipe (22) is provided in the connection unit body (12).

2. Fuel connection unit in accordance with claim 1, **characterized in that** a connection formation (30) is provided on an end area (26) of the release pipe (22), which end area is located at a distance from the connection unit body (12), for the fluid-tight connection of the fuel release line (104) to the release pipe (22).

3. Fuel connection unit in accordance with claim 2, **characterized in that** the connection formation (30) comprises at least one sealing element (32, 34) with a sealing element insertion opening (36, 38), which sealing element is received in a release opening area (28) of the release pipe (22) and is connected in a fluid-tight manner to an inner circumferential surface of the release opening area (28), or/and that the connection formation (30) provides a funnel-shaped fuel release line insertion opening (46).

4. Fuel connection unit in accordance with claim 3, **characterized in that** the connection formation (30) comprises an insertion element (40) providing the funnel-shaped fuel release line insertion opening (46), and that the at least one sealing element (32, 34) is held by the insertion element (40) in the release opening area (28).

5. Fuel connection unit in accordance with one of the claims 1-4, **characterized in that** the release pipe (22) is made in one piece with the connection unit body (12), preferably from a plastic material.

6. Fuel connection unit in accordance with one of the claims 1-5, **characterized in that** the feed pipe (50) is made in one piece with the connection unit body (12), preferably from a plastic material.

7. Fuel connection unit in accordance with one of the claims 1-5, **characterized in that** the feed pipe (50) is made separately from the connection unit body (12), preferably from a metallic material.

8. Fuel connection unit in accordance with one of the preceding claims, **characterized in that** the fuel feed line connection area (20) or/and the fuel release line connection area (16) comprises a quick connection unit received in an opening (70) of the connection unit body (12) for connecting a fuel line to the connection unit body (12).

9. Fuel connection unit in accordance with one of the preceding claims, **characterized in that** at least one holding formation (62), preferably locking formation or clamping formation, is provided on the connection unit body (12) for holding the connection unit body (12) at a heating device body (78).

10. Vehicle heating device, comprising a heating device body (78) with a circumferential wall (90) enclosing an interior (80), wherein a fuel connection unit reception opening (92) is provided in the circumferential wall and a fuel connection unit (10) in accordance with one of the preceding claims is received in the fuel connection unit reception opening (92).

11. Vehicle heating device in accordance with claim 10, **characterized in that** the fuel connection unit reception opening (92) is fully closed in the circumferential direction of the opening.

12. Vehicle heating device in accordance with claim 10 or 11, **characterized in that** the fuel connection unit (10) is received in the fuel connection unit reception opening (92) via the intermediary of at least one sealing element (68) surrounding the connection unit body (12) or/and of at least one sealing element (68) surrounding a release pipe (22).

## Revendications

1. Unité de raccordement de carburant pour un appareil de chauffage de véhicule fonctionnant au carburant, comprenant un corps d'unité de raccordement (12) à monter sur un corps d'appareil de chauffage (78) avec une zone de raccordement de conduite de distribution de carburant (16), qui doit être positionnée de telle sorte qu'elle s'engrène avec un intérieur (80) du corps d'appareil de chauffage (78) ou qu'elle soit tournée vers celui-ci, pour le raccordement d'une conduite de distribution de carburant (104) s'étendant à l'intérieur (80), et avec une zone de raccordement de conduite d'alimentation en carburant (20) à positionner à découvert sur un côté extérieur du corps d'appareil de chauffage (78) pour le raccordement d'une conduite d'alimentation en carburant, dans lequel la zone de raccordement de conduite de distribution de carburant (16) comprend un tuyau de distribution (22) faisant saillie du corps d'unité de raccordement (12),
dans lequel la zone de raccordement de conduite d'alimentation en carburant (20) comprend un tuyau d'alimentation (50) faisant saillie du corps d'unité de raccordement (12),
dans lequel le tuyau d'alimentation (50) et le tuyau de distribution (22) font saillie du corps d'unité de raccordement (12) l'un par rapport à l'autre dans des directions essentiellement opposées, dans lequel le tuyau d'alimentation (50) et le tuyau de distribution (22) sont décalés l'un par rapport à l'autre essentiellement à angle droit par rapport à un axe longitudinal (Lz) du tuyau d'alimentation (50) et à un axe longitudinal (L_{A}) du tuyau de distribution (22), dans lequel un conduit de raccordement (54) reliant un conduit d'alimentation (52) dans le tuyau d'alimentation (50) à un conduit de distribution (24) dans le tuyau de distribution (22) est prévu dans le corps d'unité de raccordement (12).

2. Unité de raccordement de carburant selon la revendication 1, **caractérisée en ce qu'**une formation de raccordement (30) est prévue sur une zone d'extrémité (26) du tuyau de distribution (22), laquelle zone d'extrémité est située à une distance du corps d'unité de raccordement (12), pour le raccordement étanche aux fluides de la conduite de distribution de carburant (104) au tuyau de distribution (22).

3. Unité de raccordement de carburant selon la revendication 2, **caractérisée en ce que** la formation de raccordement (30) comprend au moins un élément d'étanchéité (32, 34) avec une ouverture d'insertion d'élément d'étanchéité (36, 38), lequel élément d'étanchéité est reçu dans une zone d'ouverture de distribution (28) du tuyau de distribution (22) et est raccordé de manière étanche aux fluides à une surface circonférentielle intérieure de la zone d'ouverture de distribution (28), et/ou **en ce que** la formation de raccordement (30) fournit une ouverture d'insertion de conduite de distribution de carburant en forme d'entonnoir (46).

4. Unité de raccordement de carburant selon la revendication 3, **caractérisée en ce que** la formation de raccordement (30) comprend un élément d'insertion (40) fournissant l'ouverture d'insertion de conduite de distribution de carburant en forme d'entonnoir (46), et **en ce que** ledit au moins un élément d'étanchéité (32, 34) est maintenu par l'élément d'insertion (40) dans la zone d'ouverture de distribution (28).

5. Unité de raccordement de carburant selon l'une des revendications 1 à 4, **caractérisée en ce que** le tuyau de distribution (22) est réalisé d'une seule pièce avec le corps d'unité de raccordement (12), de préférence en matière plastique.

6. Unité de raccordement de carburant selon l'une des revendications 1 à 5, **caractérisée en ce que** le tuyau d'alimentation (50) est réalisé d'une seule pièce avec le corps d'unité de raccordement (12), de préférence en matière plastique.

7. Unité de raccordement de carburant selon l'une des revendications 1 à 5, **caractérisée en ce que** le tuyau d'alimentation (50) est réalisé séparément du corps d'unité de raccordement (12), de préférence en un matériau métallique.

8. Unité de raccordement de carburant selon l'une des revendications précédentes, **caractérisée en ce que** la zone de raccordement de conduite d'alimentation en carburant (20) et/ou la zone de raccordement de conduite de distribution de carburant (16) comprend une unité de raccordement rapide reçue dans une ouverture (70) du corps d'unité de raccordement (12) pour raccorder une conduite de carburant au corps d'unité de raccordement (12).

9. Unité de raccordement de carburant selon l'une des revendications précédentes, **caractérisée en ce qu'**au moins une formation de maintien (62), de préférence une formation de verrouillage ou de serrage, est prévue sur le corps d'unité de raccordement (12) pour maintenir le corps d'unité de raccordement (12) sur un corps d'appareil de chauffage (78).

10. Appareil de chauffage pour véhicule, comprenant un corps d'appareil de chauffage (78) avec une paroi circonférentielle (90) entourant un intérieur (80), dans lequel une ouverture de réception d'unité de raccordement de carburant (92) est prévue dans la paroi circonférentielle et une unité de raccordement de carburant (10) selon l'une des revendications précédentes est reçue dans l'ouverture de réception d'unité de raccordement de carburant (92).

11. Appareil de chauffage de véhicule selon la revendication 10, **caractérisé en ce que** l'ouverture de réception d'unité de raccordement de carburant (92) est entièrement fermée dans la direction circonférentielle de l'ouverture.

12. Appareil de chauffage de véhicule selon la revendication 10 ou 11, **caractérisé en ce que** l'unité de raccordement de carburant (10) est reçue dans l'ouverture de réception d'unité de raccordement de carburant (92) par l'intermédiaire d'au moins un élément d'étanchéité (68) entourant le corps d'unité de raccordement (12) et/ou d'au moins un élément d'étanchéité (68) entourant un tuyau de distribution (22).
